# EUROPÄISCHE PATENTSCHRIFT

(11) **EP 4 177 003 B1**
(45) Veröffentlichungstag und Bekanntmachung des Hinweises auf die Patenterteilung: **04.03.2026**
(21) Anmeldenummer: 22196444.8
(22) Anmeldetag: 20.09.2022
(51) Int. Cl.: B23K 37/04, B23Q 1/00

(54) **WECHSELTRÄGERSYSTEM**
EXCHANGEABLE BEAM SYSTEM
SYSTÈME DE SUPPORT INTERCHANGEABLE

(30) Priorität: 20.10.2021 DE 102021127181
(43) Veröffentlichungstag der Anmeldung: 10.05.2023
(73) Patentinhaber: Purem GmbH, 66539 Neunkirchen (DE)
(72) Erfinder: Massone, Marco, St. Wendel (DE); Krenz, Daniel, St. Wendel (DE)
(74) Vertreter: Ruttensperger Lachnit Trossin Gomoll

(56) Entgegenhaltungen:
- EP-A1- 3 524 382
- DE-A1- 4 417 857
- US-A- 4 520 919
- US-A1- 2018 001 427

## Beschreibung

Die vorliegende Erfindung betrifft ein Wechselträgersystem, welches in besonders vorteilhafter Weise in Arbeitsstationen zur Herstellung von Komponenten für Abgasanlagen von Brennkraftmaschinen eingesetzt werden kann, siehe Anspruch 1.

Bei der Herstellung von Komponenten für Abgasanlagen von Brennkraftmaschinen, wie zum Beispiel Katalysatoren, Partikelfilter oder Zusammenbaustrukturen mehrerer derartiger zur Abgasreinigung wirkender Systeme, werden diese Komponenten oder Bauteile derselben im Allgemeinen durch Verschweißen unter Einsatz von Schweißrobotern miteinander verbunden. Dazu werden die in dieser Weise zu bearbeitenden bzw. herzustellenden Komponenten in Arbeitsstationen derart positioniert, dass für die die Verbindungsvorgänge durchführenden Schweißroboter Zugriff auf die zu verschweißenden Bauteile bzw. Komponenten besteht.

Um die in derartigen Arbeitsstationen herzustellenden bzw. zu bearbeitenden Komponenten in den Arbeitsstationen anordnen zu können, können Wechselträgersysteme eingesetzt werden, welche eine an einer Arbeitsstation festgelegte Basiseinheit und eine mit der Basiseinheit zu verbindende und die zu bearbeitenden bzw. herzustellenden Komponenten bzw. Bauteile derselben tragende Trägereinheit umfassen.

Ein Wechselträgersystem gemäß dem Oberbegriff des Anspruchs 1 ist aus der US 4 520 919 A bekannt. Bei diesem Wechselträgersystem sind an einer Basiseinheit quer zu einer Schiebebewegungsrichtung, in welcher eine Trägereinheit zum Erreichen einer Arbeitsstellung bezüglich der Basiseinheit verschoben wird, nebeneinander verlaufend zwei in der gleichen Richtung orthogonal zur Schiebebewegungsrichtung hervorstehende, schienenartige Führungselemente einer Schiebeführungsformation vorgesehen. An der Trägereinheit sind die schienenartigen Führungselemente aufnehmende, eine Gegen-Schiebeführungsformation bereitstellende, in der gleichen Richtung orthogonal zur Schiebe Bewegungsrichtung offene Aussparungen ausgebildet. An der Basisstation sind ferner T-förmige und Koppel-Vorsprungsbereiche bereitstellende Koppelorgane einer Koppel/Fixier-Anordnung vorgesehen, welche beim Bewegen der Trägereinheit in der Schiebebewegungsrichtung in in der Schiebebewegungsrichtung langgestreckten, Koppel-Hinterschneidungsbereiche bereitstellenden Koppelaussparungen in als Hohlprofile ausgebildeten Gegen-Koppelorganen an der Trägereinheit geführt sind. Bei Erreichen der Arbeitsstellung kommt die Trägereinheit in Anlage an einem an der Basiseinheit ausgebildeten Bewegungsanschlag, und die T-förmigen Koppelorgane werden quer zur Schiebebewegungsrichtung bewegt, um die Trägereinheit an der Basiseinheit zu fixieren.

Die DE 44 17 857 A2 offenbart eine Fixiervorrichtung zur Festlegung von Ladegut. Die Fixiervorrichtung umfasst jeweils paarweise einander zugeordnet an langgestreckten Trägerschienen variabel festlegbare Halteelemente, zwischen welchen das zu transportierenden Ladegut aufgenommen werden kann.

Aus der EP 3 524 382 A1 ist ein Transportsystem bekannt, bei welchem ein Vorrichtungsträger vermittels einer Schnellkupplung an einer Trägerplatte einer Schweißzelle festgelegt werden kann. Die Schnellkupplung umfasst ein an der Trägerplatte festgelegtes und Schiebe-Eingriffsbereiche bereitstellende erste Kupplungseinheit sowie eine an dem Vorrichtungsträger festgelegte und Schiebe-Vorsprungsbereiche bereitstellende zweite Kupplungseinheit. Bei in einer Arbeitsstellung bezüglich einander positionierten Kupplungseinheiten sind diese durch ein vermittels einer Stellspindel verschiebbares Formschluss-Positionierungsorgan bezüglich einander fixiert.

Es ist die Aufgabe der vorliegenden Erfindung, ein derartiges Wechselträgersystem bereitzustellen, mit welchem eine schnelle und zuverlässige Positionierung von zu bearbeitenden Komponenten zur Durchführung von Arbeitsvorgängen gewährleistet werden kann.

Erfindungsgemäß wird diese Aufgabe gelöst durch ein Wechselträgersystem, insbesondere für Arbeitsstationen zur Herstellung von Komponenten für Abgasanlagen von Brennkraftmaschinen, gemäß Anspruch 1. Dieses Wechselträgersystem umfasst eine Basiseinheit und eine in einer Arbeitsstellung an der Basiseinheit lösbar zu fixierende Trägereinheit, wobei an der Basiseinheit eine Koppel/Fixier-Anordnung vorgesehen ist und an der Trägereinheit eine bei einer Schiebebewegung der Trägereinheit in einer Schiebebewegungsrichtung in die Arbeitsstellung in Formschluss-Koppeleingriff mit der Koppel/Fixier-Anordnung bringbare Gegen-Koppel/Fixier-Anordnung vorgesehen ist, und wobei bei in der Arbeitsstellung positionierter Trägereinheit die Trägereinheit durch die Koppel/Fixier-Anordnung bezüglich der Basiseinheit fixierbar ist.

Bei dem erfindungsgemäß aufgebauten Wechselträgersystem werden bei Bewegung in Arbeitsstellung zunächst die Basiseinheit und die Trägereinheit durch den Formschluss-Koppeleingriff in einen Zustand gebracht, in welchem dann durch die Fixierwirkung der Koppel/Fixier-Anordnung die Basiseinheit und die Trägereinheit zur Durchführung von Arbeitsvorgängen vorübergehend fest aneinander fixiert werden können. Ein derartiges Wechselträgersystem ist einfach aufgebaut und universell einsetzbar und ermöglicht die zeitsparende Durchführung von Vorgängen zum Anbringen einer jeweiligen Trägereinheit an einer Basiseinheit bzw. auch zum Loslösen einer Trägereinheit von einer Basiseinheit.

Es ist darauf hinzuweisen, dass im Sinne der vorliegenden Erfindung bei Bewegung einer Trägereinheit in der Schiebebewegungsrichtung diese Trägereinheit in derjenigen Bewegungsrichtung bewegt wird, in welcher die Trägereinheit sich der Arbeitsstellung annähert und diese schließlich erreicht. Zum Loslösen einer Trägereinheit von einer Basiseinheit, also zum Bewegen der Trägereinheit aus der Arbeitsstellung heraus, wird die Trägereinheit in einer der Schiebebewegungsrichtung entgegengesetzten Richtung bezüglich der Basiseinheit bewegt.

Für eine definierte Bewegung einer Trägereinheit in die Arbeitsstellung ist an der Basiseinheit eine Schiebeführungsformation vorgesehen und ist an der Trägereinheit eine Gegen-Schiebeführungsformation vorgesehen, wobei bei Bewegung der Trägereinheit in der Schiebebewegungsrichtung in die Arbeitsstellung die Trägereinheit durch Zusammenwirkung der Schiebeführungsformation mit der Gegen-Schiebeführungsformation zur Bewegung in der Schiebebewegungsrichtung geführt ist.

Zum Realisieren einer einfach aufgebauten, gleichwohl jedoch zuverlässig wirkenden Ausgestaltung umfasst die Schiebeführungsformation zwei quer zur Schiebebewegungsrichtung einander gegenüberliegende und aufeinander zu offene, in der Schiebebewegungsrichtung sich erstreckende Schiebeführungsaussparungen, und die Gegen-Schiebeführungsformation umfasst zwei quer zur Schiebebewegungsrichtung voneinander weg orientierte, in der Schiebebewegungsrichtung sich erstreckende Schiebeführungsvorsprünge, wobei bei Bewegung der Trägereinheit in der Schiebebewegungsrichtung in Richtung zur Arbeitsstellung jeder Schiebeführungsvorsprung zur Bewegung in der Schiebebewegungsrichtung in einer Schiebeführungsaussparung aufgenommen ist.

Zur Vorgabe der Arbeitsstellung einer Trägereinheit bezüglich einer Basiseinheit ist an der Basiseinheit ein Bewegungsanschlag vorgesehen, und an der Trägereinheit ist ein Gegen-Bewegungsanschlag vorgesehen, wobei bei Bewegung der Trägereinheit in der Schiebebewegungsrichtung in die Arbeitsstellung bei Erreichen der Arbeitsstellung der Gegen-Bewegungsanschlag in Anlage an dem Bewegungsanschlag kommt.

Um vermittels der Koppel/Fixier-Anordnung sowohl die Formschlusskopplung, als auch die Fixierung erreichen zu können, ist erfindungsgemäß vorgesehen, dass die Koppel/Fixier-Anordnung ein Koppelorgan umfasst und die Gegen-Koppel/Fixier-Anordnung ein Gegen-Koppelorgan umfasst, wobei das Koppelorgan eine entgegengesetzt zur Schiebebewegungsrichtung offene und quer zur Schiebebewegungsrichtung oder/und in der Schiebebewegungsrichtung einen Koppel-Hinterschneidungsbereich bildende Koppelaussparung aufweist und das Gegen-Koppelorgan einen Koppel-Vorsprungsbereich aufweist, wobei bei Bewegen der Trägereinheit in der Schiebebewegungsrichtung in die Arbeitsstellung und dabei Einführen des Gegen-Koppelorgans in die Koppelaussparung der KoppelVorsprungsbereich in den Koppel-Hinterschneidungsbereich derart eingreifend positioniert wird, dass der in einer Koppelrichtung im Wesentlichen orthogonal zur Schiebebewegungsrichtung wirksame Formschluss-Koppeleingriff zwischen dem Koppelorgan und dem Gegen-Koppelorgan entsteht.

Es ist in diesem Zusammenhang darauf hinzuweisen, dass im Sinne der vorliegenden Erfindung dieser Formschluss-Koppeleingriff dann bzw. dadurch entsteht, dass die involvierten Komponenten einander derart überlappend bzw. übergreifend positioniert werden, dass in der Richtung, in welcher der Formschluss-Koppeleingriff wirksam ist, Kräfte zwischen den involvierten Komponenten, also dem Koppelorgan und dem Gegen-Koppelorgan, übertragbar sind, beispielsweise nachdem diese bei Kraftbeaufschlagung in der Richtung, in welcher der Formschluss-Koppeleingriff wirksam ist, sich einander angenähert haben und in Anlagekontakt aneinander gekommen sind.

Für eine baulich einfach zu realisierende Ausgestaltung umfasst der Bewegungsanschlag das Koppelorgan, und der Gegen-Bewegungsanschlag umfasst das Gegen-Koppelorgan.

Zur Fixierung der Trägereinheit bezüglich der Basiseinheit bei erreichter Arbeitsstellung kann das Koppelorgan im Wesentlichen orthogonal zur Schiebebewegungsrichtung in einer der Koppelrichtung im Wesentlichen entgegengesetzten Fixierrichtung zum Fixieren der Trägereinheit bezüglich der Basiseinheit bewegbar sein.

Um diese Bewegung erzeugen zu können, kann die Koppel/Fixier-Anordnung einen Koppelorganantrieb zum Bewegen des Koppelorgans wenigstens in der Fixierrichtung umfassen.

Für eine mechanisch einfach aufzubauende, gleichwohl zuverlässig und schnell wirkende Ausgestaltung wird vorgeschlagen, dass der Koppelorganantrieb ein Druckfluidantrieb mit einer zum Bewegen des Koppelorgans in der Fixierrichtung mit Druckfluid zu speisenden ersten Druckfluidkammer ist.

Um auch den Vorgang des Loslösens einer Trägereinheit von einer Basiseinheit schnell und zuverlässig durchführen zu können, kann der Koppelorganantrieb eine zum Bewegen des Koppelorgans in einer Richtung entgegengesetzt zur Fixierrichtung mit Druckfluid zu speisende zweite Druckfluidkammer umfassen. Bei dieser Ausgestaltung ist der als Druckfluidantrieb ausgebildete Koppelorganantrieb somit doppeltwirkend ausgebildet, so dass keine zusätzlichen baulichen Maßnahmen, wie zum Beispiel Vorspannorgane oder dergleichen, erforderlich sind, um eine Bewegung des Koppelorgans beispielsweise entgegengesetzt zur Fixierrichtung zu erzwingen.

Der Koppelorganantrieb kann beispielsweise einen an einem Basiskörper der Basiseinheit vorgesehenen Zylinderbereich und einen mit dem Koppelorgan zur gemeinsamen Bewegung verbundenen, in dem Zylinderbereich bewegbar aufgenommenen Kolbenbereich umfassen.

Zur Vorgabe einer definierten Positionierung der Trägereinheit bezüglich der Basiseinheit kann eine Drehposition-Vorgabeanordnung vorgesehen sein zur Vorgabe einer Drehposition der in der Arbeitsstellung positionierten Trägereinheit bezüglich der Basiseinheit um eine zur Schiebebewegungsrichtung im Wesentlichen orthogonale Achse.

Um an der Trägerstation vorgesehene mit Druckfluid betätigte Werkzeuge beispielsweise zur Festlegung von Werkstücken mit Druckfluid zu speisen oder/und Sensorsignale über deren Betriebszustand zur Basiseinheit zu übertragen, wird vorgeschlagen, dass eine Verbindungsanordnung vorgesehen ist zur Verbindung der in der Arbeitsstellung positionierten Trägereinheit mit der Basiseinheit zur Übertragung von Druckfluid oder/und elektrischen Signalen.

Die Erfindung betrifft ferner eine Arbeitsstation, insbesondere zur Herstellung von Komponenten für Abgasanlagen von Brennkraftmaschinen, umfassend wenigstens ein, vorzugsweise eine Mehrzahl von erfindungsgemäß aufgebauten Wechselträgersystemen, siehe Anspruch 8.

Die vorliegende Erfindung wird nachfolgend mit Bezug auf die beiliegenden Figuren detailliert beschrieben. Es zeigt:
- Fig. 1: in perspektivischer Ansicht eine Basiseinheit eines Wechselträgersystems;
- Fig. 2: eine Schnittansicht der Basiseinheit der Fig. 1, geschnitten längs einer Linie II-II in Fig. 1;
- Fig. 3: eine perspektivische Ansicht einer Trägereinheit eines Wechselträgersystems;
- Fig. 4: in perspektivischer Ansicht die mit der Basiseinheit der Fig. 1 gekoppelte Trägereinheit der Fig. 3;
- Fig. 5: eine Schnittansicht des in Fig. 4 dargestellten Verbundes, geschnitten längs einer Linie V-V in Fig. 4;
- Fig. 6: eine prinzipartige Darstellung einer Arbeitsstation mit einer Mehrzahl von daran vorgesehenen Wechselträgersystemen.

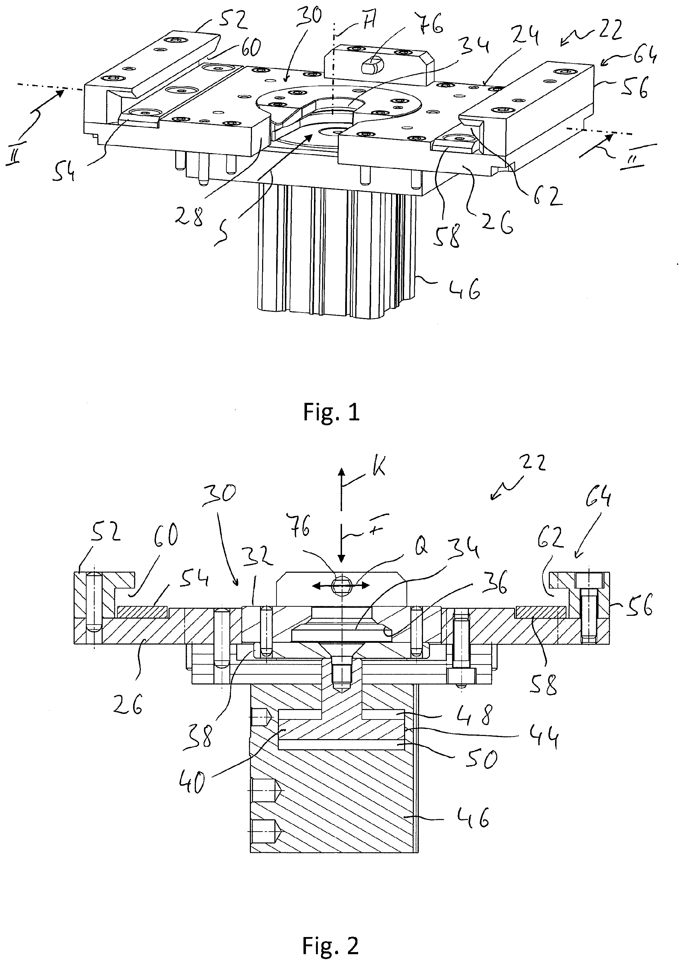

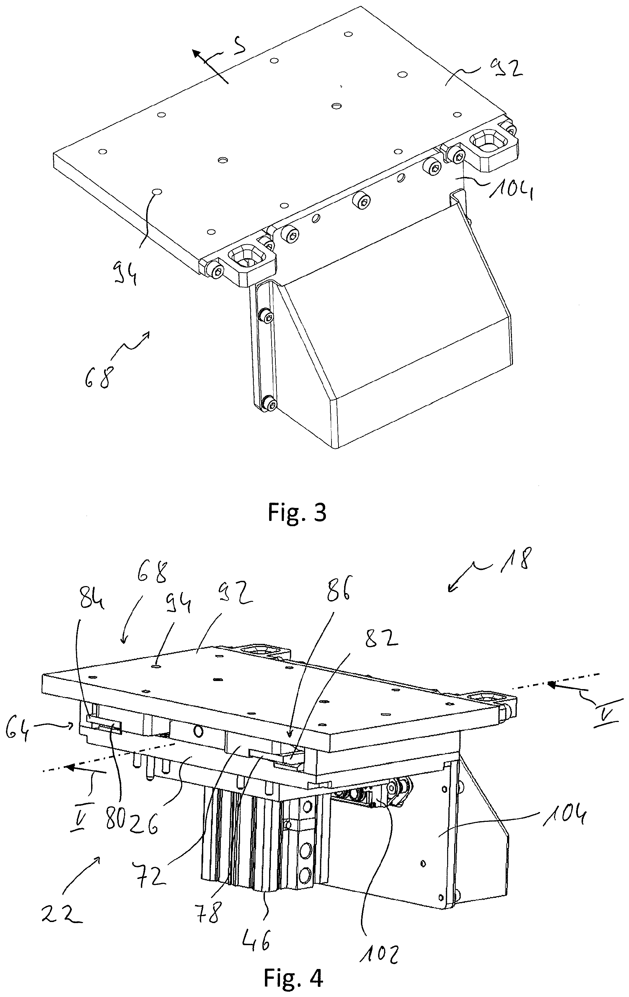

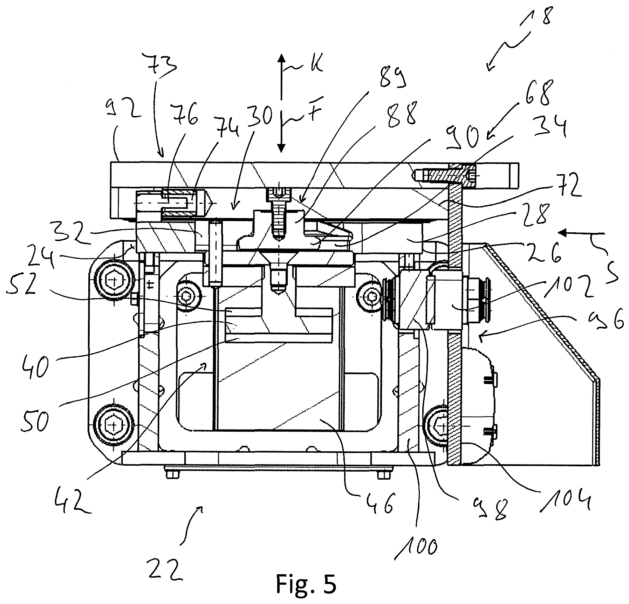

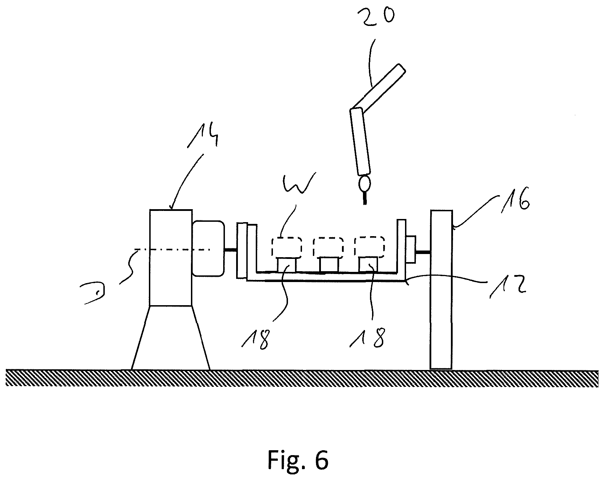

Bevor nachfolgend mit Bezug auf die Fig. 1 bis 5 detailliert der Aufbau eines Wechselträgersystems beschrieben wird, welches in besonders vorteilhafter Weise, jedoch nicht ausschließlich dazu eingesetzt werden kann, miteinander zu verschweißende Komponenten bzw. Bauteile für Abgasanlagen von Brennkraftmaschinen in einer Arbeitsstation zu positionieren, wird mit Bezug auf die Fig. 6 der prinzipielle Aufbau eines Beispiels einer derartigen Arbeitsstation erläutert.

Die in Fig. 6 beispielhaft dargestellte Arbeitsstation 10 umfasst eine Werkstückträgerbaugruppe 12, welche durch eine Antriebsbaugruppe 14 zur Drehung um eine Drehachse D antreibbar ist. In einem ihrer axialen Endbereiche ist die Werkstückträgerbaugruppe 12 mit der Antriebsbaugruppe 14 gekoppelt. Im anderen axialen Endbereich ist die Werkstückträgerbaugruppe 12 mit einer Gegenlagerbaugruppe 16 gekoppelt, so dass die Werkstückträgerbaugruppe 12 definiert zur Drehung um die Drehachse D positioniert bzw. getragen ist.

An der Werkstückträgerbaugruppe 12 sind im dargestellten Beispiel in Richtung der Drehachse D aufeinander folgend drei zueinander vorzugsweise identisch aufgebaute Wechselträgersysteme 18 vorgesehen. In jedes Wechselträgersystem 18 ist bzw. sind als Werkstück W beispielsweise eine Komponente für eine Abgasanlage einer Brennkraftmaschine bzw. deren Bauteile getragen, welche durch einen bzw. mehrere Schweißroboter 20 miteinander zu verbinden sind.

Vermittels der Wechselträgersysteme 18 können in nachfolgend detaillierter beschriebener Art und Weise die Werkstücke W schnell und zuverlässig an der Werkstückträgerbaugruppe 12 positioniert werden, um die erforderlichen Arbeitsvorgänge, insbesondere Schweißvorgänge, durchzuführen, und können nach Durchführung dieser Arbeitsvorgänge ebenso schnell von der Werkstückträgerbaugruppe entfernt werden, um dann beispielsweise zur erneuten Durchführung eines derartigen Arbeitsvorgangs andere Werkstücke an der Werkstückträgerbaugruppe 12 zu positionieren.

Ein derartiges Wechselträgersystem 18 ist mit seinen wesentlichen Systembereichen in den Fig. 1 bis 5 dargestellt. Das Wechselträgersystem 18 umfasst eine in den Fig. 1 und 2 dargestellte Basiseinheit 22 mit einem aus mehreren Bauteilen aufgebauten Basiskörper 24. Der Basiskörper 24 umfasst eine Basisplatte 26, in deren zentralem Bereich eine Aussparung 28 zur Aufnahme einer allgemein mit 30 bezeichneten Koppel/Fixier-Anordnung vorgesehen ist.

Die Koppel/Fixier-Anordnung 30 umfasst ein Koppelorgan 32, in welchem eine Koppelaussparung 34 ausgebildet ist. Die Koppelaussparung 34 ist in einer Richtung im Wesentlichen entgegengesetzt zu einer in Fig. 1 erkennbaren und nachfolgend noch erläuterten Schiebebewegungsrichtung S offen. In demjenigen Bereich, in welchem das Koppelorgan 32 bzw. die darin ausgebildete Koppelaussparung 34 entgegengesetzt zur Schiebebewegungsrichtung S offen ist, ist auch die in der Basisplatte 26 gebildete Aussparung 28 offen. Die Koppelaussparung 34 bildet am Koppelorgan 32 in einer Richtung Q quer zur Schiebebewegungsrichtung S und in der Schiebebewegungsrichtung S einen Hinterschneidungsbereich 36.

Mit dem Koppelorgan 32 ist über eine Verbindungsplatte 38 ein Kolbenbereich 40 eines als Druckfluidantrieb ausgebildeten Koppelorganantriebs 42 fest verbunden. Der Kolbenbereich 40 ist in einem Zylinderbereich 44 bewegbar aufgenommen. In dem in einem Zylinderblock 46 gebildeten Zylinderbereich 44 sind durch den Kolbenbereich 40 voneinander getrennt eine erste Druckfluidkammer 48 und eine zweite Druckfluidkammer 50 gebildet. Durch Zufuhr von Druckfluid, beispielsweise Druckluft oder einer unter Druck gesetzten Flüssigkeit, wie z. B. Öl oder dergleichen, in die erste Druckfluidkammer 48 wird der Kolbenbereich 40 und mit diesem das Kopplungsorgan 32 in einer Fixierrichtung F im Wesentlichen orthogonal zur Schiebebewegungsrichtung S und zur Richtung Q bewegt bzw. mit einer in der Fixierrichtung F wirkenden Kraft beaufschlagt. Durch Zufuhr von Druckfluid in die zweite Druckfluidkammer 50 wird der Kolbenbereich 40 und mit diesem das Koppelorgan 32 entgegengesetzt zur Fixierrichtung F in einer nachfolgen noch erläuterten Koppelrichtung K bewegt bzw. mit einer in dieser Richtung wirkenden Kraft beaufschlagt. Bei Zufuhr von Druckfluid in eine der beiden Druckfluidkammern 48, 50 wird zum Ermöglichen einer Bewegung des Kolbenbereichs 40 die jeweils andere der beiden Druckfluidkammern 48, 50 zur Abgabe von Druckfluid freigegeben. Zur Zufuhr von Druckfluid kann eine Druckfluidquelle, wie z. B. Kompressor, Pumpe oder Druckfluidspeicher, vorgesehen sein, wobei entsprechend der jeweils vorzusehenden Bewegungsrichtung bzw. Kraftbeaufschlagungsrichtung beispielsweise durch einen unter der Ansteuerwirkung einer Ansteuereinheit stehende Ventilanordnung das Druckfluid in die erste Druckfluidkammer 48 oder die zweite Druckfluidkammer 50 eingespeist wird.

An der Basisplatte 26 sind bezüglich der Schiebebewegungsrichtung S beidseits der Koppel/Fixier-Anordnung 30 durch daran festgelegte Schiebeführungsteile 52, 54 bzw. 56, 58 Schiebeführungsaussparungen 60, 62 einer allgemein mit 64 bezeichneten Schiebeführungsformation der Basiseinheit 22 bereitgestellt. Die Schiebeführungsaussparungen 60, 62 liegen einander in der Richtung Q quer zur Schiebebewegungsrichtung S gegenüber und sind aufeinander zu offen und sind gleichermaßen in der Schiebebewegungsrichtung S vorzugsweise unterbrechungsfrei durchlaufend langgestreckt.

Ferner ist eine Drehposition-Vorgabeanordnung 73 an der Basiseinheit 22 bzw. einer Trägereinheit 68 vorgesehen. Die Drehposition-Vorgabeanordnung 73 umfasst an einer Trägerplatte 72 der Trägereinheit 68 eine in der Schiebebewegungsrichtung S offene Öffnung 74, in welche ein an der Basisplatte 26 der Basiseinheit 22 getragener und entgegengesetzt zur Schiebebewegungsrichtung S hervorstehender Zapfen 76 bei in der Arbeitsstellung positionierter Trägereinheit 68 eingreift. Somit ist die Trägereinheit 68 bezüglich der Basiseinheit 22 in einer definierten Drehposition um eine zur Schiebebewegungsrichtung S bzw. zur Richtung Q orthogonale Achse A gehalten.

An ihren beiden in der Richtung Q quer zur Schiebebewegungsrichtung S liegenden Endbereichen trägt die Trägerplatte 72 Führungsplatten 78, 80, welche an der Trägerplatte 72 in der Richtung Q voneinander weg orientierte und in der Schiebebewegungsrichtung S sich erstreckende Schiebeführungsvorsprünge 82, 84 bilden. Bei Bewegung der Trägereinheit 68 in der Schiebebewegungsrichtung S auf die Basiseinheit 22 zu treten die Schiebeführungsvorsprünge 82, 84 in die in der Schiebebewegungsrichtung S grundsätzlich offene Schiebeführungsaussparungen 60, 62 ein und werden bei fortgesetzter Schiebebewegung der Trägereinheit 68 in der Schiebebewegungsrichtung S in diesen geführt. Die Schiebeführungsvorsprünge 82, 84 stellen somit im Wesentlichen eine Gegen-Schiebeführungsformation 86 bereit, welche in Zusammenwirkung mit der die Schiebeführungsaussparungen 60, 62 aufweisenden Schiebeführungsformation 64 eine definierte Schiebebewegungsführung der Trägereinheit 68 bezüglich der Basiseinheit 22 bewirken.

An der Trägerplatte 72 ist ferner an einer der Basisplatte 26 zugewandt zu positionierenden Seite derselben ein im Wesentlichen pilzartig geformtes Gegen-Koppelorgan 88 vorgesehen. Das Gegen-Koppelorgan 88 stellt im Wesentlichen eine Gegen-Koppel/Fixier-Anordnung 89 bereit und bildet einen KoppelVorsprungsbereich 90, welcher hinsichtlich seiner Formgebung und auch seiner Dimensionierung an die Formgebung und die Dimensionierung des Koppel-Hinterschneidungsbereichs 36 des Koppelorgans 32 angepasst ist.

Bei Bewegung der Trägereinheit 68 in der Schiebebewegungsrichtung S auf die Basiseinheit zu tritt insbesondere dann, wenn die Schiebeführungsvorsprünge 82, 84 in den Schiebeführungsaussparungen 60, 62 geführt sind, das Gegen-Koppelorgan 88 in die Koppelaussparung 34 des Koppelorgans 32 ein, wobei gleichzeitig der Koppelvorsprungsbereich 90 in den Koppel-Hinterschneidungsbereich 36 eintritt. Dadurch übergreift das Koppelorgan 32 mit seinem die Koppelaussparung 34 umgebenden und den Koppel-Hinterschneidungsbereich 36 bildenden Bereich den Koppel-Vorsprungsbereich 90 des Gegen-Koppelorgans 88 an der der Trägerplatte 72 zugewandten Seite desselben und es wird ein in der Koppelrichtung K wirksamer Formschluss-Koppeleingriff zwischen dem Koppelorgan 32 und dem Gegen-Koppelorgan 88 erzeugt. Es ist zu betonen, dass bei durch die Bewegung der Trägereinheit 68 in die Arbeitsstellung hergestelltem Formschluss-Koppeleingriff zwischen dem Koppelorgan 32 und dem Gegen-Koppelorgan 88 das Gegen-Koppelorgan 88 und das Koppelorgan 32 in der Koppelrichtung K nicht notwendigerweise in Anlagekontakt aneinander sein müssen. Es könnte zwischen grundsätzlich ein geringes Bewegungsspiel in der Koppelrichtung K vorhanden sein.

In diesem Zustand könnte auch durch Zusammenwirkung der Schiebeführungsvorsprünge 82, 84 mit den Schiebeführungsaussparungen 60, 62 ein in der Koppelrichtung K wirkender Formschluss zwischen der Basiseinheit 22 und der Trägereinheit 68 ein Bewegen der Trägereinheit 68 von der Basiseinheit 22 weg in der Koppelrichtung K verhindern.

Eine definierte Positionierung der Trägereinheit 68 bezüglich der Basiseinheit 22 in der Schiebebewegungsrichtung S wird durch einen Bewegungsanschlag 66 vorgegeben. Dieser ist im Wesentlichen bereitgestellt durch das Koppelorgan 32 mit der darin ausgebildeten Koppelaussparung 34. Ein Gegen-Bewegungsanschlag 70 ist im Wesentlichen bereitgestellt durch das Gegen-Koppelorgan 88, welches bei Erreichen der Arbeitsstellung so weit in die Koppelaussparung 34 eingeführt ist, dass deren Ende erreicht ist und somit das Gegen-Koppelorgan 68 in Anlage am Koppelorgan 32 kommt.

Die Trägereinheit 68 könnte nach Erreichen der durch die Zusammenwirkung des Bewegungsanschlags 66 mit dem Gegen-Bewegungsanschlag 70 definierten Arbeitsstellung wieder in einer der Schiebebewegungsrichtung S entgegengesetzten Richtung von der Basiseinheit 22 losgelöst werden. Um dies zu verhindern, kann nach Erreichen der Arbeitsstellung und dem dabei grundsätzlich hergestellten Formschluss-Koppeleingriff zwischen dem Koppelorgan 32 und dem Gegen-Koppelorgan 88 der Koppelorganantrieb 42 beispielsweise durch manuelle Eingabe eines Aktivierungsbefehls aktiviert werden. Bei Aktivierung des Koppelorganantriebs 42 wird Druckfluid in die erste Druckfluidkammer 48 eingespeist und somit das Koppelorgan 32 in der der Koppelrichtung K im Wesentlichen entgegengesetzten Fixierrichtung F in die in der Basisplatte 26 gebildete Aussparung 28 hinein bewegt. Bei dieser Bewegung kommt das Koppelorgan 32 in Anlage an dem mit diesem in der Koppelrichtung K in Formschluss-Koppeleingriff stehenden Gegen-Koppelorgan 88 bzw. nimmt das Koppelorgan 32 das von diesem übergriffene Gegen-Koppelorgan 88 mit bzw. beaufschlagt dieses mit einer in der Fixierrichtung F wirkenden Kraft. Dadurch wird die Trägerplatte 72 in Richtung auf die Basisplatte 26 zu bewegt bzw. mit einer in dieser Richtung wirkenden Kraft beaufschlagt. Es kann dabei in direkter Anlagekontakt zwischen der Trägerplatte 72 und der Basisplatte 26 entstehen, oder es können die an der Trägerplatte 72 vorgesehenen und die Schiebeführungsvorsprünge 82, 84 bereitstellenden Platten 78, 80 gegen die plattenartigen Schiebeführungsteile 54, 58 gepresst werden, welche zusammen mit den L-förmigen Schiebeführungsteilen 52, 56 die Schiebeführungsaussparungen 60, 62 bilden.

Aufgrund des Koppeleingriffs und des in der Koppelrichtung K wirkenden Formschlusses wird durch die in der Fixierrichtung F wirkende Anpresswirkung und den dabei entstehenden Kraftschluss bzw. Reibschluss die Trägereinheit 68 an der Basiseinheit 22 gegen eine Bewegung entgegengesetzt zur Schiebebewegungsrichtung S fixiert. In diesem Zustand kann dann ein derartiges Wechselträgersystem 18 dazu genutzt werden, an daran getragenen Werkstücken Arbeitsvorgänge, beispielsweise Schweißvorgänge, durchzuführen. Zur Anbringung derartiger Werkstücke an der Trägereinheit 68 kann beispielsweise an der Trägerplatte 72 eine Werkstückplatte 92 vorgesehen sein, in welcher eine Mehrzahl von beispielsweise als Innengewindeöffnungen ausgebildeten Befestigungsöffnungen vorgesehen sein kann, um vermittels geeigneter Halterungen bzw. hierfür vorgesehener Haltewerkzeuge Werkstücke an der Werkstückplatte 92 festzulegen.

Auch derartige Haltewerkzeuge können mit Druckfluid, beispielsweise Druckluft, betätigt sein. Um Druckfluid in den Bereich der Trägereinheit 68 leiten zu können, ist eine allgemein mit 96 bezeichnete Verbindungsanordnung vorgesehen. Diese umfasst einen Basis-Verbindungsteil 98, der an dem Basiskörper 24, beispielsweise einer die Basisplatte 26 tragenden Trägerstruktur 100, festgelegt ist. In Zuordnung zum Basis-Verbindungsteil 98 umfasst die Verbindungsanordnung 96 an der Trägereinheit 68 einen Träger-Verbindungsteil 102. Dieser kann an einer an der Werkstückplatte 92 oder/und der Trägerplatte 72 festgelegten Platte 104 getragen sein, welche bei in der Arbeitsstellung positionierter Trägereinheit 68 der Tragestruktur 100 bzw. dem Basis-Verbindungsteil 98 gegenüberliegt.

Nähert sich die Trägereinheit 68 der Arbeitsstellung an bzw. wird die Arbeitsstellung erreicht, treten der Basis-Verbindungsteil 98 und der Träger-Verbindungsteil 102 in Wechselwirkung miteinander, so dass eine Fluidaustauschverbindung zwischen einem an der Basiseinheit 22 vorgesehen Leistungsbereich und einem an der Trägereinheit 68 vorgesehenen Leitungsbereich hergestellt wird. Auch eine Signalübertragungsverbindung zur Übertragung elektrischer Signale, insbesondere von Sensorsignalen, zwischen der Trägereinheit 68 und der Basiseinheit 22 kann vermittels der Verbindungsanordnung 96 bei in der Arbeitsstellung positionierter Trägereinheit 68 hergestellt werden, um Sensorsignale von an der Trägereinheit 68 angeordneten Sensoren, welche beispielsweise eine korrekte Halterung von Werkstücken erkennen, zur Basiseinheit bzw. einer damit gekoppelten Ansteuereinheit zu übertragen. Bei Bewegung aus der Arbeitsstellung heraus wird diese Verbindung unterbrochen, wobei insbesondere zum Vermeiden einer Fluidleckage im Bereich der Basiseinheit an dem Basis-Verbindungteil 98 vorgesehene Ventile den an der Basiseinheit vorgesehenen Leitungsbereich abschließen können.

Soll nach Beendigung eines Arbeitsvorgangs die Trägereinheit 68 von der Basiseinheit 22 losgelöst werden, kann durch die Ansteuereinheit der Koppelorganantrieb 42 derart angesteuert werden, dass das Koppelorgan 32 das Gegen-Koppelorgan 88 freigibt, was im dargestellten Ausgestaltungsbeispiel dadurch bewirkt wird, dass Druckfluid in die zweite Druckfluidkammer 50 eingespeist wird und das Koppelorgan 32 entgegengesetzt zur Fixierrichtung F, also in der Koppelrichtung K, bewegt wird. Daraufhin kann die Trägereinheit 68 entgegengesetzt zur Schiebebewegungsrichtung S von der Basiseinheit 22 entfernt werden, und es kann eine andere Trägereinheit 68 an der selben Basiseinheit 22 fixiert werden.

Mit einem erfindungsgemäß aufgebauten Wechselträgersystem wird es möglich, in einfacher und schnell durchzuführender Art und Weise eine Trägereinheit an einer Basiseinheit zu fixieren bzw. von dieser loszulösen und zu bearbeitende Werkstücke beispielsweise in einer Arbeitsstation zu positionieren bzw. nach Durchführung eines Arbeitsvorgangs von dieser zu entfernen oder eine Arbeitsstation durch den Einsatz verschiedener Arten von Trägereinheiten für verschiedene Arbeitsvorgänge, beispielsweise zur Bearbeitung verschiedener Werkstücke, nutzen zu können. Das Wechselträgersystem ist konstruktiv einfach ausgeführt und führt aufgrund seiner grundsätzlich modulartigen Struktur zu einer Verringerung der erforderlichen Lagerfläche für einzelne Systembereiche derselben. Aufgrund der universellen Einsetzbarkeit eines derartigen Wechselträgersystems besteht die Möglichkeit, auch in international operierenden Einheiten in einem zentralen Beschaffungsprozess gleichgebaute Wechselträgersysteme bereitzustellen, was zu einer erheblichen Kosteneinsparung beitragen kann.

## Patentansprüche

1. Wechselträgersystem, insbesondere für Arbeitsstationen zur Herstellung von Komponenten für Abgasanlagen von Brennkraftmaschinen, umfassend eine Basiseinheit (22) und eine in einer Arbeitsstellung an der Basiseinheit (22) lösbar zu fixierende Trägereinheit (68), wobei:
- an der Basiseinheit (22) eine Koppel/Fixier-Anordnung (30) vorgesehen ist und an der Trägereinheit (68) eine bei einer Schiebebewegung der Trägereinheit (68) in einer Schiebebewegungsrichtung (S) in die Arbeitsstellung in Formschluss-Koppeleingriff mit der Koppel/Fixier-Anordnung (30) bringbare Gegen-Koppel/Fixier-Anordnung (89) vorgesehen ist und bei in der Arbeitsstellung positionierter Trägereinheit (68) die Trägereinheit (68) durch die Koppel/Fixier-Anordnung (30) bezüglich der Basiseinheit (22) fixierbar ist,
- an der Basiseinheit (22) eine Schiebeführungsformation (64) vorgesehen ist und an der Trägereinheit (68) eine Gegen-Schiebeführungsformation (86) vorgesehen ist, wobei bei Bewegung der Trägereinheit (68) in der Schiebebewegungsrichtung (S) in die Arbeitsstellung die Trägereinheit (68) durch Zusammenwirkung der Schiebeführungsformation (64) mit der Gegen-Schiebeführungsformation (86) zur Bewegung in der Schiebebewegungsrichtung (S) geführt ist,
- an der Basiseinheit (22) ein Bewegungsanschlag vorgesehen ist und an der Trägereinheit (68) ein Gegen-Bewegungsanschlag vorgesehen ist, wobei bei Bewegung der Trägereinheit (68) in der Schiebebewegungsrichtung (S) in die Arbeitsstellung bei Erreichen der Arbeitsstellung der Gegen-Bewegungsanschlag in Anlage an dem Bewegungsanschlag kommt,
- wobei die Koppel/Fixier-Anordnung (30) ein Koppelorgan (32) umfasst und die Gegen-Koppel/Fixier-Anordnung (89) ein Gegen-Koppelorgan (88) umfasst, wobei das Koppelorgan (32) eine entgegengesetzt zur Schiebebewegungsrichtung (S) offene und quer zur Schiebebewegungsrichtung (S) oder/und in der Schiebebewegungsrichtung (S) einen Koppel-Hinterschneidungsbereich (36) bildende Koppelaussparung (34) aufweist und das Gegen-Koppelorgan (88) einen Koppel-Vorsprungsbereich (90) aufweist, wobei bei Bewegen der Trägereinheit (68) in der Schiebebewegungsrichtung (S) in die Arbeitsstellung und dabei Einführen des Gegen-Koppelorgans (88) in die Koppelaussparung (34) der Koppel-Vorsprungsbereich (90) in den Koppel-Hinterschneidungsbereich (36) derart eingreifend positioniert wird, dass der in einer Koppelrichtung (K) im Wesentlichen orthogonal zur Schiebebewegungsrichtung (S) wirksame Formschluss-Koppeleingriff zwischen dem Koppelorgan (32) und dem Gegen-Koppelorgan (88) entsteht, wobei das Koppelorgan (32) im Wesentlichen orthogonal zur Schiebebewegungsrichtung (S) in einer der Koppelrichtung (K) im Wesentlichen entgegengesetzten Fixierrichtung (F) zum Fixieren der Trägereinheit (68) bezüglich der Basiseinheit (22) bewegbar ist,
**dadurch gekennzeichnet,**
- **dass** die Schiebeführungsformation (64) zwei quer zur Schiebebewegungsrichtung (S) einander gegenüberliegende und aufeinander zu offene, in der Schiebebewegungsrichtung (S) sich erstreckende Schiebeführungsaussparungen (60, 62) umfasst,
- **dass** die Gegen-Schiebeführungsformation (86) zwei quer zur Schiebebewegungsrichtung (S) voneinander weg orientierte, in der Schiebebewegungsrichtung (S) sich erstreckende Schiebeführungsvorsprünge (82, 84) umfasst, wobei bei Bewegung der Trägereinheit (68) in der Schiebebewegungsrichtung (S) in Richtung zur Arbeitsstellung jeder Schiebeführungsvorsprung (82, 84) zur Bewegung in der Schiebebewegungsrichtung (S) in einer Schiebeführungsaussparung (60, 62) aufgenommen ist, und
- **dass** der Bewegungsanschlag das Koppelorgan (32) umfasst und der Gegen-Bewegungsanschlag das Gegen-Koppelorgan (88) umfasst.

2. Wechselträgersystem nach Anspruch 1, **dadurch gekennzeichnet, dass** die Koppel/Fixier-Anordnung (30) einen Koppelorganantrieb (42) zum Bewegen des Koppelorgans (32) wenigstens in der Fixierrichtung (F) umfasst.

3. Wechselträgersystem nach Anspruch 2, **dadurch gekennzeichnet, dass** der Koppelorganantrieb (42) ein Druckfluidantrieb mit einer zum Bewegen des Koppelorgans (32) in der Fixierrichtung (F) mit Druckfluid zu speisenden ersten Druckfluidkammer (48) ist.

4. Wechselträgersystem nach Anspruch 3, **dadurch gekennzeichnet, dass** der Koppelorganantrieb (42) eine zum Bewegen des Koppelorgans (32) in einer Richtung entgegengesetzt zur Fixierrichtung (F) mit Druckfluid zu speisende zweite Druckfluidkammer (50) umfasst.

5. Wechselträgersystem nach Anspruch 3 oder 4, **dadurch gekennzeichnet, dass** der Koppelorganantrieb (42) einen an einem Basiskörper (24) der Basiseinheit (22) vorgesehenen Zylinderbereich (44) und einen mit dem Koppelorgan (32) zur gemeinsamen Bewegung verbundenen, in dem Zylinderbereich (44) bewegbar aufgenommenen Kolbenbereich (40) umfasst.

6. Wechselträgersystem nach einem der Ansprüche 1-5, **dadurch gekennzeichnet, dass** eine Drehposition-Vorgabeanordnung (73) vorgesehen zur Vorgabe einer Drehposition der in der Arbeitsstellung positionierten Trägereinheit (68) bezüglich der Basiseinheit (22) um eine zur Schiebebewegungsrichtung (S) im Wesentlichen orthogonale Achse (A).

7. Wechselträgersystem nach einem der Ansprüche 1-6, **dadurch gekennzeichnet, dass** eine Verbindungsanordnung (96) vorgesehen ist zur Verbindung der in der Arbeitsstellung positionierten Trägereinheit (68) mit der Basiseinheit (22) zur Übertragung von Druckfluid oder/und elektrischen Signalen.

8. Arbeitsstation, insbesondere zur Herstellung von Komponenten für Abgasanlagen von Brennkraftmaschinen, umfassend wenigstens ein, vorzugsweise eine Mehrzahl von Wechselträgersystemen (18) nach einem der vorangehenden Ansprüche.

## Claims

1. An interchangeable carrier system, in particular for workstations for producing components for exhaust systems of internal combustion engines, comprising a base unit (22) and a carrier unit (68), which is to be releasably fixed to the base unit (22) in a working position, wherein:
- a coupling/fixing arrangement (30) is provided on the base unit (22) and a counterpart coupling/fixing arrangement (89), which can be brought into positive coupling engagement with the coupling/fixing arrangement (30) during a sliding movement of the carrier unit (68) in a sliding movement direction (S) into the working position, is provided on the carrier unit (68), and wherein, when the carrier unit (68) is positioned in the working position, the carrier unit (68) can be fixed with respect to the base unit (22) by the coupling/fixing arrangement (30),
- a sliding guide formation (64) is provided on the base unit (22) and a counterpart sliding guide formation (86) is provided on the carrier unit (68), wherein, when the carrier unit (68) is moved in the sliding movement direction (S) into the working position, the carrier unit (68) is guided for movement in the sliding movement direction (S) by the cooperation of the sliding guide formation (64) with the counterpart sliding guide formation (86),
- a movement stop is provided on the base unit (22) and a counterpart movement stop is provided on the carrier unit (68), wherein, when the carrier unit (68) is moved in the sliding movement direction (S) into the working position, the counterpart movement stop comes into contact with the movement stop when the working position is reached,
- wherein the coupling/fixing arrangement (30) comprises a coupling member (32) and the counterpart coupling/fixing arrangement (89) comprises a counterpart coupling member (88), wherein the coupling member (32) has a coupling recess (34) which is open counter to the sliding movement direction (S) and forms a coupling undercut region (36) transversely with respect to the sliding movement direction (S) or/and in the sliding movement direction (S), and the counterpart coupling member (88) has a coupling projection region (90), wherein, when the carrier unit (68) is moved in the sliding movement direction (S) into the working position and, at the same time, the counterpart coupling member (88) is introduced into the coupling recess (34), the coupling projection region (90) is positioned such that it engages in the coupling undercut region (36) in such a way that the positive coupling engagement between the coupling member (32) and the counterpart coupling member (88), which coupling engagement is effective in a coupling direction (K) substantially orthogonal to the sliding movement direction (S), is produced, wherein the coupling member (32) can be moved substantially orthogonally to the sliding movement direction (S) in a fixing direction (F), which is substantially opposite to the coupling direction (K), in order to fix the carrier unit (68) with respect to the base unit (22),
**characterized in**
- **that** the sliding guide formation (64), comprises two sliding guide recesses (60, 62) which are situated opposite one another transversely with respect to the sliding movement direction (S) and are open toward one another and extend in the sliding movement direction (S),
- **that** the counterpart sliding guide formation (86) comprises two sliding guide projections (82, 84), which are oriented away from one another transversely with respect to the sliding movement direction (S) and extend in the sliding movement direction (S), wherein, when the carrier unit (68) is moved in the sliding movement direction (S) in the direction of the working position, each sliding guide projection (82, 84) is received in a sliding guide recess (60, 62) for movement in the sliding movement direction (S), and
- **that** the movement stop comprises the coupling member (32), and the counterpart movement stop comprises the counterpart coupling member (88).

2. The interchangeable carrier system as claimed in claim 1, **characterized in that** the coupling/fixing arrangement (30) comprises a coupling member drive (42) for moving the coupling member (32) at least in the fixing direction (F).

3. The interchangeable carrier system as claimed in claim 2, **characterized in that** the coupling member drive (42) is a pressure fluid drive having a first pressure fluid chamber (48) to be fed with pressure fluid in order to move the coupling member (32) in the fixing direction (F).

4. The interchangeable carrier system as claimed in claim 3, **characterized in that** the coupling member drive (42) comprises a second pressure fluid chamber (50), which is to be fed with pressure fluid in order to move the coupling member (32) in a direction opposite to the fixing direction (F).

5. The interchangeable carrier system as claimed in claim 3 or 4, **characterized in that** the coupling member drive (42) comprises a cylinder region (44), which is provided on a base body (24) of the base unit (22), and a piston region (40), which is connected to the coupling member (32) for joint movement and is accommodated movably in the cylinder region (44).

6. The interchangeable carrier system as claimed in any of claims 1-5, **characterized in that** a rotational position specification arrangement (73) is provided for specifying a rotational position of the carrier unit (68), which is positioned in the working position, with respect to the base unit (22) about an axis (A) which is substantially orthogonal to the sliding movement direction (S).

7. The interchangeable carrier system as claimed in any of claims 1-6, **characterized in that** a connecting arrangement (96) is provided to connect the carrier unit (68), which is positioned in the working position, to the base unit (22) in order to transmit pressure fluid or/and electrical signals.

8. A workstation, in particular for producing components for exhaust systems of internal combustion engines, comprising at least one, preferably a plurality of, interchangeable carrier systems (18) as claimed in any of the preceding claims.

## Revendications

1. Un système de support interchangeable, en particulier pour des postes de travail destinés à la fabrication de composants pour des systèmes d'échappement de moteurs à combustion interne, comprenant une unité de base (22) et une unité de support (68) qui doit être fixée de manière amovible à l'unité de base (22) dans une position de travail, dans lequel :
- un dispositif d'accouplement/fixation (30) est prévu sur l'unité de base (22) et un dispositif d'accouplement/fixation complémentaire (89), qui peut être amené en prise positive d'accouplement avec le dispositif d'accouplement/fixation (30) lors d'un mouvement de coulissement de l'unité de support (68) dans une direction de mouvement coulissant (S) vers la position de travail, est prévu sur l'unité de support (68), et dans lequel, lorsque l'unité de support (68) est positionnée dans la position de travail, l'unité de support (68) peut être fixée par rapport à l'unité de base (22) par le dispositif d'accouplement/fixation (30),
- une formation de guidage coulissant (64) est prévue sur l'unité de base (22) et une formation de guidage coulissant complémentaire (86) est prévue sur l'unité de support (68), dans lequel, lorsque l'unité de support (68) est déplacée dans la direction de mouvement coulissant (S) dans la position de travail, l'unité de support (68) est guidée pour se déplacer dans la direction de mouvement coulissant (S) par la coopération de la formation de guidage coulissant (64) avec la formation de guidage coulissant complémentaire (86),
- une butée de mouvement est prévue sur l'unité de base (22) et une butée de mouvement complémentaire est prévue sur l'unité de support (68), dans lequel, lorsque l'unité de support (68) est déplacée dans la direction de mouvement coulissant (S) vers la position de travail, la butée de mouvement complémentaire entre en contact avec la butée de mouvement lorsque la position de travail est atteinte,
- dans lequel le dispositif d'accouplement/fixation (30) comprend un élément d'accouplement (32) et le dispositif d'accouplement/fixation complémentaire (89) comprend un élément d'accouplement complémentaire (88), dans lequel l'élément d'accouplement (32) présente un évidement d'accouplement (34) qui est ouvert dans le sens opposé à la direction de mouvement coulissant (S) ou/et dans la direction de mouvement coulissant (S) et forme une zone de contre-dépouille d'accouplement (36) transversalement par rapport à la direction de mouvement coulissant (S), et l'élément d'accouplement complémentaire (88) présente une zone de saillie d'accouplement (90), dans lequel, lorsque l'unité de support (68) est déplacée dans la direction de mouvement coulissant (S) dans la position de travail et, en même temps, l'élément d'accouplement complémentaire (88) est introduit dans l'évidement d'accouplement (34), la zone de saillie d'accouplement (90) est positionnée de manière à s'engager dans la zone de contre-dépouille d'accouplement (36) de telle sorte que l'engagement d'accouplement positif entre l'élément d'accouplement (32) et l'élément d'accouplement complémentaire (88), lequel engagement d'accouplement est efficace dans une direction d'accouplement (K) sensiblement orthogonale à la direction de mouvement coulissant (S), dans lequel l'élément d'accouplement (32) peut être déplacé sensiblement orthogonalement à la direction de mouvement coulissant (S) dans une direction de fixation (F) sensiblement opposée à la direction d'accouplement (K) afin de fixer l'unité de support (68) par rapport à l'unité de base (22),
**caractérisé en**
- **ce que** la formation de guidage coulissant (64) comprend deux évidements de guidage coulissant (60, 62) qui sont situés l'un en face de l'autre transversalement par rapport à la direction de mouvement coulissant (S) et qui sont ouverts l'un vers l'autre et s'étendent dans la direction de mouvement coulissant (S),
- ce que la formation de guidage coulissant complémentaire (86) comprend deux saillies de guidage coulissant (82, 84) qui sont orientées à l'opposé l'une de l'autre transversalement par rapport à la direction de mouvement coulissant (S) et s'étendent dans la direction de mouvement coulissant (S), dans lequel, lorsque l'unité de support (68) est déplacée dans la direction de mouvement coulissant (S) vers la position de travail, chaque saillie de guidage coulissant (82, 84) est logée dans un évidement de guidage coulissant (60, 62) pour un mouvement dans la direction de mouvement coulissant (S), et
- ce que la butée de mouvement comprend l'élément d'accouplement (32), et la butée de mouvement complémentaire comprend l'élément d'accouplement complémentaire (88).

2. Le système de support interchangeable selon la revendication 1, **caractérisé en ce que** le dispositif d'accouplement/fixation (30) comprend un entraînement d'élément d'accouplement (42) pour déplacer l'élément d'accouplement (32) au moins dans la direction de fixation (F).

3. Le système de support interchangeable selon la revendication 2, **caractérisé en ce que** l'entraînement d'élément d'accouplement (42) est un entraînement à fluide sous pression comportant une première chambre à fluide sous pression (48) destinée à être alimentée en fluide sous pression afin de déplacer l'élément d'accouplement (32) dans la direction de fixation (F).

4. Le système de support interchangeable selon la revendication 3, **caractérisé en ce que** l'entraînement d'élément d'accouplement (42) comprend une deuxième chambre de fluide sous pression (50) qui doit être alimentée en fluide sous pression afin de déplacer l'élément d'accouplement (32) dans une direction opposée à la direction de fixation (F).

5. Le système de support interchangeable selon la revendication 3 ou 4, **caractérisé en ce que** l'entraînement d'élément d'accouplement (42) comprend une zone de cylindre (44), qui est prévue sur un corps de base (24) de l'unité de base (22), et une zone de piston (40), qui est raccordée à l'élément d'accouplement (32) pour un mouvement conjoint et qui est logée de manière mobile dans la zone de cylindre (44).

6. Le système de support interchangeable selon l'une quelconque des revendications 1 à 5, **caractérisé en ce qu'**un dispositif de spécification de position de rotation (73) est prévu pour spécifier une position de rotation de l'unité de support (68), qui est positionnée dans la position de travail, par rapport à l'unité de base (22) autour d'un axe (A) qui est sensiblement orthogonal à la direction de mouvement coulissant (S).

7. Le système de support interchangeable selon l'une quelconque des revendications 1 à 6, **caractérisé en ce qu'**un dispositif de raccordement (96) est prévu pour raccorder l'unité de support (68), qui est positionnée dans la position de travail, à l'unité de base (22) afin de transmettre un fluide sous pression et/ou des signaux électriques.

8. Un poste de travail, en particulier pour la fabrication de composants pour systèmes d'échappement de moteurs à combustion interne, comprenant au moins un, de préférence une pluralite de systèmes de support interchangeables (18) selon l'une quelconque des revendications précédentes.
